(19) Europäisches Patentamt
European Patent Office
Office européen des brevets

(11) Numéro de publication : **0 140 799**
**B1**

(12) # FASCICULE DE BREVET EUROPÉEN

(45) Date de publication du fascicule du brevet : **03.12.86**

(51) Int. Cl.⁴ : **D 06 L 3/02**, C 11 D 3/395

(21) Numéro de dépôt : **84420153.3**

(22) Date de dépôt : **17.09.84**

(54) **Nouvelles compositions pour le blanchiment alcalin des textiles.**

(30) Priorité : **20.09.83 FR 8314911**

(43) Date de publication de la demande :
**08.05.85 Bulletin 85/19**

(45) Mention de la délivrance du brevet :
**03.12.86 Bulletin 86/49**

(84) Etats contractants désignés :
**BE CH DE FR GB IT LI**

(56) Documents cités :
**FR-A- 2 075 053**
**GB-A- 1 198 433**
**GB-A- 1 223 571**
**Article de E.G.E. HAWKINS, J. Chemical Society, 1969, pages 2678-2681**

(73) Titulaire : **ATOCHEM**
**4 & 8, Cours Michelet La Défense 10**
**F-92800 Puteaux (FR)**

(72) Inventeur : **Dubreux, Bernard**
**"Le Grillon" - Tour E Chemin de Chantegrillet**
**F-69340 Francheville-Le-Bas (FR)**
Inventeur : **Emeraud, Jackie**
**42 rue Louis Chagont**
**F-78350 Jouy En Josas (FR)**
Inventeur : **Tatin, Gérard Les Jardins de l'Oise**
**5, 7 rue Benjamin Raspail**
**F-60100 Creil (FR)**
Inventeur : **Schirmann, Jean-Pierre**
**49 Chemin de la Glacière**
**F-69600 Oullins (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 140 799 B1

Jouve, 18, rue St-Denis, 75001 Paris, France

**Description**

La présente invention concerne de nouvelles compositions à base de dérivés peroxydiques pour le blanchiment alcalin des textiles, dont les performances sont supérieures à celles du perborate de sodium ou du percarbonate de sodium.

L'utilisation des persels comme agents de blanchiment dans les formulations pour lavages ménagers est connue depuis longtemps. Le percarbonate de sodium et le perborate de sodium, surtout ce dernier, sont utilisés couramment dans des formules de grandes marques de lessive. Ces persels sont intéressants car ils constituent des moyens efficaces de stockage du peroxyde d'hydrogène à l'état solide, garantissant ainsi une meilleure stabilité, et se dissolvent dans l'eau de lavage en relibérant le peroxyde d'hydrogène qui est de ce fait le véritable agent d'oxydation.

Dans le milieu alcalin qu'est le bain de lavage, le peroxyde d'hydrogène est instable et se décompose partiellement en eau et oxygène. Le peroxyde d'hydrogène est également sensible à la présence d'ions de métaux lourds dont l'action néfaste peut être réduite par l'adjonction de sequestrants.

Malgré l'instabilité du peroxyde d'hydrogène, des formulations à base de persels, bien connues de l'homme de l'art, peuvent être mises en œuvre pour procurer un blanchiment acceptable à des températures aux moins égales à 60 °C.

De telles formulations présentent néanmoins deux inconvénients majeurs : la performance des enzymes protéolytiques qu'elles renferment couramment est diminuée par la présence des persels et elles présentent une sensibilité désavantageuse aux enzymes provenant de la souillure des textiles, telles que, notamment, les catalases.

Les catalases, dont l'action a été décrite pour la première fois par THENARD en 1818, ont été découvertes dans les caillots sanguins. Certaines bactéries aérobies en contiennent.

Les catalases provoquent la décomposition du peroxyde d'hydrogène.

Certaines personnes génèrent naturellement de la catalase et, lors du lavage du linge sale qu'elles ont porté, le persel, tel que par exemple le perborate de sodium, est décomposé sans qu'il y ait effet de blanchiment.

Pour pallier ces inconvénients, il a été proposé, comme c'est le cas dans le brevet US-A-3 746 646, de remplacer le peroxyde d'hydrogène ou les persels par des hydroperoxydes organiques, ou plus exactement, à cause de leur solubilité dans l'eau généralement très faible, par des dérivés de ces hydroperoxydes, tels que leurs sels alcalins. Une telle substitution a le désavantage de ne pouvoir procurer un effet de blanchiment notable qu'à une température plus élevée encore que celle pour laquelle cet effet est obtenu avec les persels ou qu'à l'aide d'une activation par des sels de métaux de transition aggravant inévitablement la pollution.

Les formulations, objet de la présente invention, apportent une solution à ces problèmes : elles conservent en eau sale, c'est-à-dire dans des conditions réelles de lavage, une performance de blanchissement excellente, très supérieure à celle des formulations à base de persels, et altèrent notablement moins l'action des enzymes protéolytiques qu'elles peuvent renfermer.

Les formulations utilisables dans le cadre de l'invention sont caractérisées en ce qu'elles contiennent au moins un dérivé peroxydé appartenant au groupe constitué par les composés de formule générale suivante :

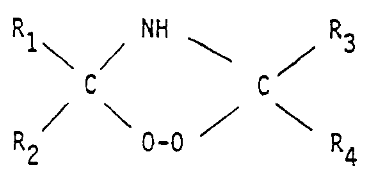

(I)

décrits, ainsi que leurs préparations, notamment dans l'article de E.G.E. HAWKINS, J. Chem. Soc., (1969), 191, pp. 2678-2681.

Dans la formule (I), $R_1$, $R_2$, $R_3$, $R_4$, identiques ou différents, représentent l'hydrogène, un radical alkyle linéaire ayant de 1 à 12 atomes de carbone, un radical cycloalkyle ou alkyle ramifié ayant de 3 à 12 atomes de carbone, un radical hydrocarboné aromatique ayant de 6 à 12 atomes de carbone, et sont substitués ou non par un atome de chlore, de brome, de fluor, par un groupe nitro, hydroxy, alcoxy ou un reste éthylénique ou ester carboxylique, $R_1$ et $R_2$ d'une part et/ou $R_3$ et $R_4$ d'autre part pouvant respectivement ne former qu'un seul radical alkylène linéaire ou ramifié ayant de 3 à 12 atomes de carbone.

Les formulations de la présente invention peuvent contenir en outre un ou plusieurs enzymes protéolytiques.

Les exemples suivants illustrent l'invention sans la limiter.

Dans ces exemples les produits A et B, appartenant aux composés définis sous (I), et ayant respectivement pour formule :

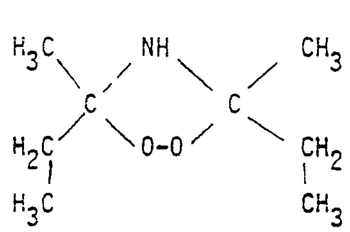
et
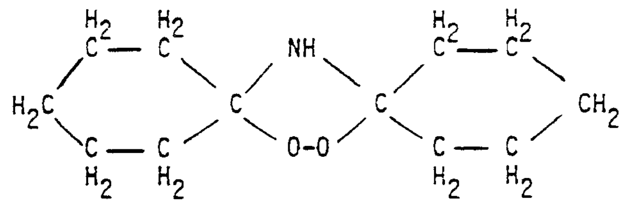

ont été testés dans des formulations de blanchiment et leur sensibilité à la catalase bactérienne a été comparée à celle du perborate de sodium.

La souche bactérienne choisie a été la souche CORYNEBACTERIUM sp. CIP 100 133, disponible à l'Institut PASTEUR, 25 rue du Docteur-Roux, 75015 PARIS, FRANCE, contenant $2.10^8$ germes par millilitre et incubée avant utilisation durant 24 heures à 28 °C dans un milieu ayant la composition suivante :

| | |
|---|---|
| Peptone trypsique de caséine | 10 g |
| Extrait de viande en pâte | 3 g |
| Chlorure de sodium | 5 g |
| Extrait de levure | 0,5 g |
| Agar agar | 20 g |
| Eau déminéralisée | 1 000 ml |

Les bactéries ont été introduites dans le milieu lessiviel d'essai par l'intermédiaire d'un liquide physiologique contenant 9 g/l de chlorure de sodium.

Les performances des produits A et B ont été aussi évaluées, comparativement à celle du perborate de sodium, dans des formulations de blanchiment renfermant un enzyme protéolytique.

Exemple 1 (comparatif)

Un bain lessiviel contenant 1 g/l de perborate de sodium tétrahydraté et 5,7 g de lessive de base EMPA® est ensemencé à raison de 40 ml de solution bactérienne de catalase définie plus haut par litre de bain lessiviel, le bain lessiviel contenant donc après ensemencement $8 \cdot 10^6$ germes par millilitre.

Ce bain lessiviel ensemencé a servi à des essais de lavage sur tissu EMPA® taché de vin rouge selon le cycle de lavage suivant : montée en 30 minutes à 90 °C et palier à cette température durant 30 minutes.

Le blanc a été mesuré avant et après lavage avec un reflectomètre ZEISS-ELREPHO.

Le pouvoir blanchissant exprimé, en pour cent, par le rapport :

$$\frac{\text{blanc final} - \text{blanc initial}}{100 - \text{blanc initial}}$$

a été de 36,1 %

Exemple 2

Un bain lessiviel contenant 1 g/l de produit A au lieu de perborate de sodium et 5,7 g/l de lessive de base EMPA® a été ensemencé comme décrit dans l'exemple 1 et a été testé sur tissu EMPA® taché de vin rouge selon le cycle de lavage défini dans l'exemple 1.

Le pouvoir blanchissant a été trouvé égal à 46,7 %, donc bien supérieur à celui dû à la présence de perborate de sodium, et ceci en présence de catalase, c'est-à-dire dans des conditions réelles de lavage.

Exemples 3 à 5

Ces exemples concernent des compositions lessivielles renfermant un enzyme protéolytique, l'ESPERASE® de la Société NOVO.

Exemple 3 (comparatif)

Un bain lessiviel constitué d'une lessive de base EMPA® contenant 0,4 % d'ESPERASE® a servi au lavage du tissu EMPA 116 (salissures protéiques : lait, sang, encre de Chine), à 60 °C selon le cycle de lavage : montée à 60 °C en 15 minutes et palier de 30 minutes à cette température, et à 90 °C avec des durées de montée en température et de palier égales toutes deux à 30 minutes. Les valeurs obtenues du pouvoir blanchissant figurent dans le tableau I ci-après.

Exemple 4 (comparatif)

Les mêmes tests de lavage que dans l'exemple 3 ont été effectués avec un bain lessiviel contenant 1

g/l de perborate de sodium tétrahydraté, 5,7 g/l de lessive de base EMPA® et 0,026 8 g/l d'ESPERASE®.
Les valeurs obtenues du pouvoir blanchissant figurent dans le tableau I.

Exemple 5

Les mêmes tests de lavage que dans les deux essais précédents ont été effectués avec un bain lessiviel contenant 1 g/l de produit A, 5,7 g/l de lessive de base EMPA® et 0,026 8 g/l d'ESPERASE®.
Les valeurs obtenues du pouvoir blanchissant figurent dans le tableau I.

Tableau I

| N° de l'exemple | 3 | | 4 | | 5 | |
|---|---|---|---|---|---|---|
| Température, °C | 60 | 90 | 60 | 90 | 60 | 90 |
| pouvoir blanchissant, en % | 37,4 | 39,4 | 20,3 | 15,3 | 31,6 | 29,0 |

Les résultats du tableau I montrent clairement que, à 60 °C comme à 90 °C, l'activité de l'ESPERASE® est très nettement moins affectée par le produit A que par le perborate de sodium.

Exemple 6

Un bain lessiviel contenant 1,3 g/l de produit B, c'est-à-dire le même nombre d'équivalents peroxydiques qu'apportait le produit A dans l'exemple 2, et 5,7 g/l de lessive de base EMPA® a été ensemencé comme décrit dans l'exemple 1 et testé comme dans l'exemple 2.
Le pouvoir blanchissant obtenu est de 43 %.

Exemple 7

En opérant comme dans l'exemple 5 mais en remplaçant le produit A par le produit B à raison de 1,3 g/l, le pouvoir blanchissant est égal à 32,4 % pour le cycle de lavage à 60 °C et à 31,2 % pour le cycle de lavage à 90 °C.
Les exemples 6 et 7 montrent que les conclusions faites quant aux performances des compositions lessivielles contenant le produit A valent pour celles contenant le produit B.

## Revendications

1. Formulations pour blanchiment alcalin des textiles durant le lavage caractérisées en ce qu'elles contiennent un produit de lavage et au moins un dérivé peroxydé appartenant au groupe constitué par les composés de formule générale suivante :

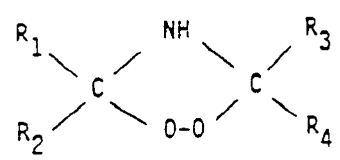

(I)

dans laquelle $R_1$, $R_2$, $R_3$, $R_4$ représentent l'hydrogène, un radical alkyle linéaire ayant de 1 à 12 atomes de carbone, un radical cycloalkyle ou alkyle ramifié ayant de 3 à 12 atomes de carbone, un radical hydrocarboné aromatique ayant de 6 à 12 atomes de carbone, et sont substitués ou non par un atome de chlore, de brome, de fluor, par un groupe nitro, hydroxy, alkoxy ou un reste éthylénique ou ester carboxylique, $R_1$ et $R_2$ d'une part et/ou $R_3$ et $R_4$ d'autre part pouvant respectivement ne former qu'un seul radical alkylène linéaire ou ramifié ayant de 3 à 12 atomes de carbone.
2. Formulations selon la revendication 1 caractérisées en ce que le composé de formule générale (I) a pour formule :

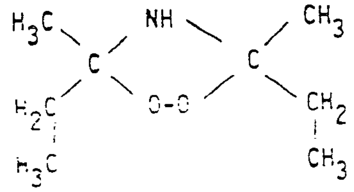

3. Formulations selon la revendication 1 caractérisées en ce que le composé de formule générale (I) a pour formule :

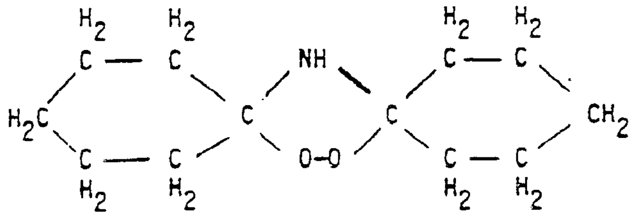

4. Formulations selon l'une quelconque des revendications 1, 2 et 3 caractérisées en ce qu'elles contiennent au moins un enzyme protéolytique.

**Claims**

1. Formulations for alkaline bleaching of textiles during washing, characterized in that they contain a washing product and at least one peroxide derivative belonging to the group consisting of the compounds of the following general formula :

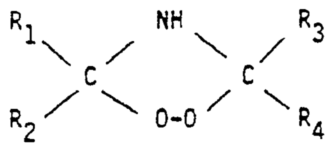

(I)

in which $R_1$, $R_2$, $R_3$, $R_4$ denote hydrogen, a linear alkyl radical containing from 1 to 12 carbon atoms, a cycloalkyl or branched alkyl radical containing from 3 to 12 carbon atoms, or an aromatic hydrocarbon radical containing from 6 to 12 carbon atoms, and which are optionally substituted by a chlorine, bromine or fluorine atom, by a nitro, hydroxyl or alkoxy group or an ethylenic residue or carboxylic ester, it being possible for, on the one hand, $R_1$ and $R_2$ and/or, on the other hand, $R_3$ and $R_4$ to form, respectively, only a single linear or branched alkylene radical containing from 3 to 12 carbon atoms.

2. Formulations according to Claim 1, characterized in that the compound of general formula (I) has the formula :

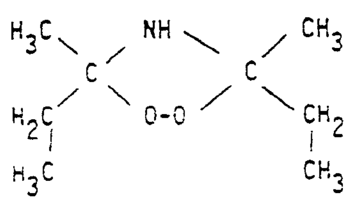

3. Formulations according to Claim 1, characterized in that the compound of general formula (I) has the formula :

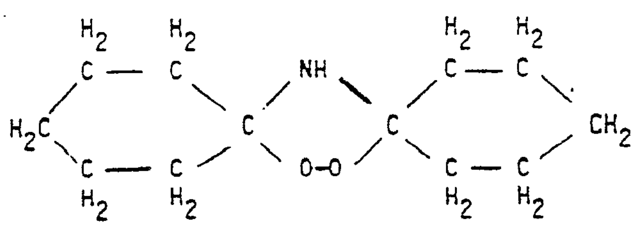

4. Formulations according to any one of Claims 1, 2 and 3, characterized in that they contain at least one proteolytic enzyme.

**Patentansprüche**

1. Zusammensetzungen zum alkalischen Bleichen von Textilien, dadurch gekennzeichnet, daß sie ein Waschmittel und mindestens ein Peroxid-Derivat enthalten, das der Gruppe mit den Verbindungen der folgenden allgemeinen Formel angehört,

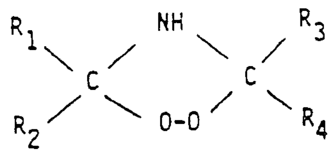

(I)

in der $R_1$, $R_2$, $R_3$, $R_4$ Wasserstoff, einen geradkettigen Alkylrest mit 1 bis 2 Kohlenstoffatomen, einen Cycloalkylrest oder einen verzweigten Alkylrest mit 3 bis 12 Kohlenstoffatomen, einen aromatischen Kohlenwasserstoffrest mit 6 bis 12 Kohlenstoffatomen bedeuten, die gegebenenfalls durch ein Chlor-, Brom- oder Fluoratom, eine Nitro-, Hydroxy- oder Alkoxygruppe, einen Äthylenrest oder einen Carbonsäureester substituiert sind, wobei $R_1$ und $R_2$ einerseits und/oder $R_3$ und $R_4$ andererseits jeweils nur ein geradkettiger oder verzweigter Alkylenrest mit 3 bis 12 Kohlenstoffatomen sein können.

2. Zusammensetzungen nach Anspruch 1, dadurch gekennzeichnet, daß die Verbindung der allgemeinen Formel (I) die Formel :

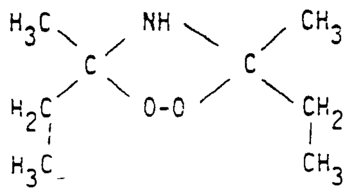

hat.

3. Zusammensetzungen nach Anspruch 1, dadurch gekennzeichnet, daß die Verbindung der allgemeinen Formel (I) die Formel :

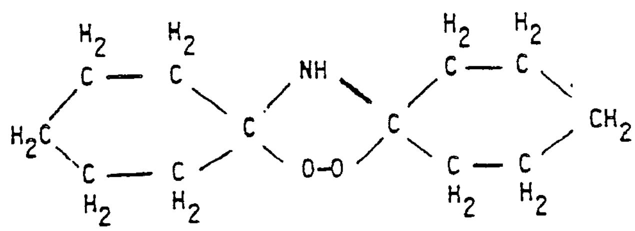

hat.

4. Zusammensetzungen nach einem der Ansprüche 1, 2 und 3, dadurch gekennzeichnet, daß sie mindestens ein eiweißspaltendes Enzym enthalten.